# EUROPEAN PATENT APPLICATION

(11) **EP 0 743 336 A2**
(43) Date of publication of application: **20.11.1996**
(21) Application number: 96201310.8
(22) Date of filing: 13.05.1996
(51) Int. Cl.: C08G 67/02, B01J 31/00, C07F 9/50

(54) **A process for the preparation of a linear alternating copolymer of carbon monoxide with ethene and another olefinically unsaturated compound**

(30) Priority: 18.05.1995 EP 95201313
(71) Applicant: SHELL INTERNATIONALE RESEARCH MAATSCHAPPIJ B.V., 2596 HR Den Haag (NL)
(72) Inventor: Baardman, Frank, 1031 CM Amsterdam (NL); Bleeker, Erwin Paulus Petrus, 1031 CM Amsterdam (NL); van Broekhoven, Maria Barbara Hendrica, 1031 CM Amsterdam (NL); Crijnen-van Beers, Maria Barbara Hendrica, 1031 CM Amsterdam (NL); Drent, Eit, 1031 CM Amsterdam (NL); Dulles, Elizabeth Hubertina Francisca, 1031 CM Amsterdam (NL); Jager, Willem Wabe, 1031 CM Amsterdam (NL); Jubb, Jayne, 1031 CM Amsterdam (NL); van der Made, Alexander Willem, 1031 CM Amsterdam (NL); Scheerman, Pieter, 1031 CM Amsterdam (NL); de With, Jan, 1031 CM Amsterdam (NL)

(57) **Abstract**

A process for the preparation of a linear alternating copolymer of carbon monoxide with ethene and another olefinically unsaturated compound (A) wherein a copolymer of which the molar ratio (r₁) of the monomer units originating in the olefinically unsaturated compound A to the monomer units originating in ethene is in the range of from 1:100 to 1:3, is prepared by contacting the monomers in the presence of a liquid diluent with a catalyst composition which is based on
(a) a source of a Group VIII metal, and
(b) a bidentate ligand of the general formula R¹R²M¹-R-M²R³R⁴ (I) wherein M¹ and M² independently represent a phosphorus, arsenic or antimony atom, R¹, R², R³ and R⁴ independently represent unsubstituted or substituted aryl groups and R represents a bivalent bridging group which consists of three atoms in the bridge of which the middle atom is a tetravalent atom which carries two monovalent substituents R⁵ and R⁶ consisting of carbon, hydrogen and optionally oxygen, and the two outer bridging atoms are carbon atoms, while the quotient r₂/r₁ is less than 24, in which quotient r₁ is as defined hereinbefore and r₂ is the molar ratio of the olefinically unsaturated compound A to ethene in the liquid phase.

## Description

The present invention relates to a process for the preparation of a linear alternating copolymer of carbon monoxide with ethene and another olefinically unsaturated compound.

It is disclosed, inter alia in EP-A-257663, that linear alternating copolymers of carbon monoxide with ethene and another olefinically unsaturated compound (A) can be prepared by contacting the monomers with a catalyst composition which is based on
(a) a source of a Group VIII metal, and
(b) a bidentate ligand of the general formula R¹R²M¹-Q-M²R³R⁴ wherein M¹ and M² independently represent a phosphorus, arsenic or antimony atom, R¹, R², R³ and R⁴ independently represent unsubstituted or substituted hydrocarbyl groups and Q represents a bivalent bridging group which contains at least two carbon atoms in the bridge. The copolymers obtained are strictly alternating or, in other words, the monomer units originating in carbon monoxide and the monomer units originating in ethene and the olefinically unsaturated compound A occur in a strictly alternating order. The polymer chains consist of randomly arranged units -CO-(CH₂CH₂)- and -CO-A'-, wherein A' denotes a monomer unit originating in the olefinically unsaturated compound A. A preferred bidentate ligand for use in this process is 1,3-bis[bis(2-methoxyphenyl)phosphino]propane.

Using this process semi-crystalline copolymers can be prepared which can have a variety of melting points, depending on the quantity of the olefinically unsaturated compound A incorporated therein relative to the quantity of ethene. That is to say, starting from a copolymer of carbon monoxide and exclusively ethene the melting point thereof can be lowered by replacing monomer units originating in ethene by monomer units originating in the olefinically unsaturated compound A. Lowering the melting point favours a smooth melt processing of the copolymer.

However, a problem associated with this process is that a large excess of the olefinically unsaturated compound A needs to be present in the polymerization mixture to achieve an appreciable level of incorporation thereof. For example, a terpolymer of carbon monoxide, ethene and propene containing monomer units originating in propene in a quantity of about 6 mole-%, relative to the total of monomer units originating in ethene and propene, may be prepared in a slurry process in which the quantity of propene is as high as 50 %-vol of the total liquid phase. This is disadvantageous, because the presence of a large excess of the olefinically unsaturated compound A reduces the capacity of the reactor employed for the copolymerization and recycling the excess involves the handling of an undesirable large quantity of material.

Applicant has attempted to improve this situation. These attempts involved variations in a number of process parameters such as the polymerization temperature, the ratio of carbon monoxide to the total of the olefins present and the relative quantities of catalyst components. However, these variations did not bring about a reduction in the quantity of the olefinically unsaturated compound A needed to achieve the desired level of incorporation. In some cases the variations resulted in an unacceptable decrease of the polymerization rate or of the molecular weight of the copolymer.

Surprisingly, Applicant has now found that the use of a bidentate ligand which contains a special kind of bridging group connecting the atoms M¹ and M² provides a solution of the problem described above. The bridging group in question has three atoms in the bridge of which the middle atom carries two substituents, R⁵ and R⁶, which consist of carbon, hydrogen and optionally oxygen. Very advantageously, it was subsequently found that a further decrease of the quantity of the olefinically unsaturated compound A present in the reaction mixture could be achieved, substantially without detriment to the rate of polymerization, by increasing the molar ratio of carbon monoxide to the total of the olefins present in the polymerization mixture. By doing so even a copolymer with increased molecular weight could be obtained.

It will thus be clear that by these findings it is convenient to recover the relatively small excess of olefinically unsaturated compound A and to reuse it in a subsequent copolymerization process. It is a very attractive option to carry out the copolymerization process as a continuous process with a recycle of the olefinically unsaturated compound A.

A further advantage of selecting a branched group connecting the atoms M¹ and M² resides in a more narrow molecular weight distribution of the copolymer prepared, in particular when the copolymer is a copolymer of carbon monoxide and ethene. The molecular weight distribution may be expressed in the Q value, which is the ratio of the weight average molecular weight and the number average molecular weight, which can be determined by gel permeation chromatography.

It has also been found that it is very advantageous to select a n-alkyl group of at least two carbon atoms as a group R⁵ or R⁶, in particular when, in addition to ethene, as the olefinically unsaturated compound A an aliphatic α-olefin which comprises 4-15 carbon atoms is used. As an additional advantage, this selection of the groups R⁵ or R⁶ provides an increased polymerization rate, in combination with an increased molecular weight of the copolymer prepared, compared with the case in which methyl groups are selected as the groups R⁵ and R⁶. The latter is unexpected in the light of EP-A-296687 because this document teaches that the use of catalyst compositions based on a bidentate ligand having a branched bridging group and employing otherwise unchanged reaction conditions leads in the copolymerization of carbon monoxide with ethene to an increased polymerisation rate at an unchanged molecular weight of the copolymer product.

In view hereof the present invention relates to a process for the preparation of a linear alternating copolymer of carbon monoxide with ethene and another olefinically unsaturated compound (A) wherein a copolymer of which the molar ratio (r₁) of the monomer units originating in the olefinically unsaturated compound A to the monomer units originating in ethene is in the range of from 1:100 to 1:3, is prepared by contacting the monomers in the presence of a liquid diluent with a catalyst composition which is based on
(a) a source of a Group VIII metal, and
(b) a bidentate ligand of the general formula R¹R²M¹-R-M²R³R⁴ (I) wherein M¹ and M² independently represent a phosphorus, arsenic or antimony atom, R¹, R², R³ and R⁴ independently represent unsubstituted or substituted aryl groups and R represents a bivalent bridging group which consists of three atoms in the bridge of which the middle atom is a tetravalent atom which carries two monovalent substituents R⁵ and R⁶ consisting of carbon, hydrogen and optionally oxygen, and the two outer bridging atoms are carbon atoms, while the quotient r₂/r₁ is less than 24, in which quotient r₁ is as defined hereinbefore and r₂ is the molar ratio of the olefinically unsaturated compound A to ethene in the liquid phase.

The invention further relates to a process for the preparation of a linear alternating copolymer of carbon monoxide with ethene and another olefinically unsaturated compound (A) wherein a copolymer of which the molar ratio (r₁) of the monomer units originating in the olefinically unsaturated compound A to the monomer units originating in ethene is in the range of from 1:100 to 1:3, is prepared by contacting the monomers with a catalyst composition which is based on
(a) a source of a Group VIII metal, and
(b) a bidentate ligand of the general formula (I) with M¹, M², R¹, R², R³, R⁴ and R as defined hereinbefore, while the quotient r₂/r₃ is less than 0.9, in which quotient r₂ is the molar ratio of the olefinically unsaturated compound A to ethene in the reaction phase, and r₃ is the molar ratio of the olefinically unsaturated compound A to ethene in the reaction phase of an identical process which is carried out to obtain a copolymer having the same ratio r₁ as the copolymer to be prepared except that in the latter process the bidentate ligand of the general formula (I) is replaced by an equimolar quantity of a bidentate ligand of the general formula R¹R²M¹-CH₂-CH₂-CH₂-M²R³R⁴ wherein the groups M¹, M², R¹, R², R³ and R⁴ are chosen as for the bidentate ligand of the formula (I) and that r₃ differs from r₂ whilst the same total molar quantity of the olefinically unsaturated compound A and ethene is applied.

In addition the invention relates to a further process for the preparation of a linear alternating copolymer of carbon monoxide with an olefinically unsaturated compound (A), not being ethene, and optionally ethene comprising contacting carbon monoxide with the olefinically unsaturated compound A and optionally ethene in the presence of a suitable catalyst, on the understanding that at least a part of the olefinically unsaturated compound A has been recovered from a preceding process for the preparation of a linear alternating copolymer of carbon monoxide with ethene and the olefinically unsaturated compound A which preceding process comprises contacting the monomers with a catalyst composition which is based on
(a) a source of a Group VIII metal, and
(b) a bidentate ligand of the general formula (I) with M¹, M², R¹, R², R³, R⁴ and R as defined hereinbefore.

For the reasons set out above it is advantageous when the further process is carried out using ethene as one of the monomers and using as the catalyst a catalyst composition as defined for the preceding process, in particular for preparing a copolymer which has a molar ratio r₁ being equal to the molar ratio r₁ of the copolymer prepared in the preceding process, more in particular for preparing a copolymer which has also the same molecular weight as the copolymer prepared in the preceding process. For example, the preceding and the further process may represent consecutive phases of the same continuous process in which a recycle of the olefinically unsaturated compound A is applied.

The present invention also relates to a novel catalyst composition which is based on
(a) a source of a Group VIII metal, and
(b) a bidentate ligand of the general formula R¹R²M¹-R-M²R³R⁴ wherein M¹ and M² independently represent a phosphorus, arsenic or antimony atom, R¹, R², R³ and R⁴ independently represent unsubstituted or substituted hydrocarbyl groups and R represents a bivalent bridging group which consists of three atoms in the bridge of which the middle atom is a tetravalent atom which carries two monovalent substituents R⁵ and R⁶ at least one of which represents a n-alkyl group of at least two carbon atoms and the other of R⁵ and R⁶, if any, is a group consisting of carbon, hydrogen and optionally oxygen, and the two outer bridging atoms are carbon atoms.

The present invention also relates to a process for the preparation of linear alternating copolymers of carbon monoxide with ethene and optionally with another olefinically unsaturated compound (A) comprising contacting the monomers with a novel catalyst composition as defined in the preceding paragraph.

For a wide range of olefinically unsaturated compounds A (i.e. independent of their structure and their molecular weight) it holds that the copolymers having a molar ratio r₁ from 1:100 to 1:3 have a melting point in the range of from about 150 °C to about 245 °C. This holds in particular for aliphatic α-olefins consisting of carbon and hydrogen, typically having up to 10 carbon atoms, more typically up to 6 carbon atoms. It is preferred that copolymers are prepared of which the molar ratio r₁ is in the range of from 1:50 to 1:5. These copolymers have a melting point in the range of from about 180 °C to about 240 °C. In view of an advantageous balance of mechanical properties of the copolymers and their melt processing temperature it is preferred to prepare copolymers which have a molar ratio r₁ in the range of from 1:25 to 1:10, corresponding with a melting point in the range of from about 210 to about 235 °C. Another preferred category of copolymers have the molar ratio r₁ in the range of from 1:10 to 1:5, corresponding with a melting point in the range of from about 180 to about 210 °C.

In the present specification and claims the term "Group VIII metal" encompasses the noble metals ruthenium, rhodium, palladium, osmium, iridium and platinum, and the iron group metals iron, cobalt and nickel.

The catalyst composition suitable for use in the process of the invention is based on a source of cations of the said metal. Suitable sources of cations of metals of Group VIII include salts of mineral acids, such as salts of sulphuric acid, nitric acid and phosphoric acid, and salts of sulphonic acids, such as methanesulphonic acid and para-toluenesulphonic acid. Preferred sources are salts of carboxylic acids, in particular those having up to 6 carbon atoms, such as acetic acid, propionic acid and trifluoroacetic acid. If desired, as cation source use may be made of the metals in their elemental form, or in a zero-valent state thereof, e.g. in complex form, such as complexes wherein the Group VIII metal is covalently bonded to one or two hydrocarbyl groups.

Catalyst compositions based on a noble Group VIII metal are preferred, those based on palladium being most preferred. A preferred source of palladium is palladium (II) acetate.

The catalyst composition is based on a bidentate ligand of the general formula

R¹R²M¹-R-M²R³R⁴

with M¹, M², R¹, R², R³, R⁴ and R as defined hereinbefore. M¹ and M² preferably represent phosphorus atoms. R¹, R², R³ and R⁴ may independently represent optionally polar substituted alkyl, aryl, aralkyl or cycloalkyl groups. Throughout this patent document the term "aryl group" includes (cyclo)alkylaryl groups.

It is preferred that at least one of R¹, R², R³ and R⁴ represents an aryl group which is polar substituted. Suitable polar groups include halogen atoms, such as fluorine and chlorine, alkoxy groups such as methoxy and ethoxy groups and alkylamino groups such as methylamino-, dimethylamino- and diethylamino groups. Alkoxy groups and alkylamino groups contain in particular up to 5 carbon atoms in each of their alkyl groups.

It is more preferred that each of R¹, R², R³ and R⁴ represents an aryl group, typically a phenyl group, substituted in particular at an ortho position with respect to M¹ or M², with a polar group, especially an alkoxy group, more especially a methoxy group.

In the ligands of formula (I), R represents in accordance with this invention a bridging group which consists of three atoms in the bridge of which the middle atom is a tetravalent atom which carries two substituents R⁵ and R⁶ which consist of carbon, hydrogen and optionally oxygen, and the two outer bridging atoms are carbon atoms, typically the carbon atoms of methylene groups (-CH₂-). The said tetravalent atom is typically a carbon or silicon atom, but it may also be e.g. germanium or tin.

The substituents R⁵ and R⁶ are typically identical to one another. They may be, for example, aliphatic or aromatic hydrocarbyl groups and they may contain ether linkages, such as in alkoxyalkyl groups. They have typically up to 15 carbon atoms, more typically up to 10 carbon atoms. The substituents R⁵ and R⁶ may suitably be connected to one another by an additional link, i.e. other than by the middle atom of the bridge, so that they form together with that middle atom a ring structure. For example, such a situation represents itself when the substituents together form a -CH₂-CH₂-CH₂-CH₂- group or a -CH₂-O-C(CH₃)₂-O-CH₂- group. The substituents R⁵ and R⁶ are preferably separate alkyl groups, in particular methyl groups.

Preferred ligands are 2,2-dimethyl-1,3-bis(2-methoxyphenyl,phenylphosphino)propane, 2,2-dimethyl-1,3-bis[bis-(2-methoxyphenyl)phosphino]propane and 2,2-dimethyl-1,3-bis[bis(2-methoxyphenyl)phosphino]-2-silapropane. The ligands mentioned here are known from EP-A-300583 and EP-A-296687.

As indicated hereinbefore, it is particularly advantageous to employ in the bidentate ligand separate groups R⁵ and R⁶ at least one of which represents a n-alkyl group having at least two carbon atoms, namely consisting of a straight chain of at least two carbon atoms and hydrogen atoms. Preferably R⁵ and R⁶ represent both a n-alkyl group having at least two carbon atoms. The number of carbon atoms in these n-alkyl groups is typically at most 6 and preferably at most 4. The n-alkyl groups comprise preferably an equal number of carbon atoms.

An example of a ligand of this type is 2,2-diethyl-1,3-bis[bis(2-methoxyphenyl)phosphino]propane, which can be prepared by using standard chemistry, well known to the skilled person. For example, dimethyl 1,1-diethylmalonate can be reduced with lithium aluminium hydride to 2,2-diethylpropane-1,3-diol, which is bis-tosylated using p-toluenesulphonyl chloride. The bis-tosylate can be converted into 1,3-dibromo-2,2-diethylpropane using sodium bromide under phase transfer conditions. The dibromide can be converted into the bidentate ligand by the procedures known from EP-A-300583 employing tris(2-methoxyphenyl)phosphine. Other examples of ligands of this type are 2-ethyl-2-n-butyl-1,3-bis[bis(2-methoxyphenyl)phosphino]propane and 2,2-diethyl-1,3-bis[bis(2-methoxyphenyl)phosphino]-2-silapropane.

The amount of bidentate ligand applied may vary considerably, but is usually dependent on the amount of metal of Group VIII, present in the catalyst composition. Preferred amounts of bidentate ligands are in the range of 0.5 to 8, preferably in the range of 0.5 to 2 moles per gram atom of metal of Group VIII.

The Group VIII metal containing catalyst composition is typically based on a source of anions as a further catalyst component. The skilled person will appreciate that suitable anions are those which are non- or only weakly coordinating with the Group VIII metal under the conditions of the copolymerization. Examples of suitable anions are anions of protic acids, which include acids which are obtainable by combining a Lewis acid and a protic acid, and acids which are adducts of boric acid and a 1,2-diol, a catechol or a salicylic acid. Preferred acids are strong acids, i.e. those which have a pKa of less than 6, in particular less than 4, more in particular less than 2, when measured in aqueous solution at 18 °C. Examples of suitable protic acids are the above mentioned acids which may also participate in the Group VIII salts, e.g. trifluoroacetic acid. Examples of Lewis acids which can be combined with a protic acid are as the Lewis acids defined and exemplified hereinafter, in particular boron trifluoride, boron pentafluoride, tin dichloride, tin difluoride, tin di(methylsulphonate), aluminium trifluoride and arsenic pentafluoride, triphenylborane, tris(perfluorophenyl)borane and tris[3,5-bis(trifluoromethyl)phenyl]borane. Examples of protic acids which may be combined with a Lewis acid are sulphonic acids and hydrohalogenic acids, in particular hydrogen fluoride. Very suitable combinations of a Lewis acid with a protic acid are tetrafluoroboric acid and hexafluoroboric acid (HBF₄ and HBF₆). Other suitable anions are anions of which it appears that there are no stable conjugated acids, such as tetrahydrocarbylborate anions or carborate anions. Borate anions may comprise the same or different hydrocarbyl groups attached to boron, such as alkyl, aryl, aralkyl, and cycloalkyl groups. Preferred are tetraarylborates, such as tetraphenylborate, tetrakis[3,5-bis(trifluoromethyl)phenyl]borate and tetrakis(perfluorophenyl)borate, and carborate (B₁₁CH₁₂⁻).

The source of anions may be an acid from which the anions are derivable, or their salts. Suitable salts are, for example, cobalt and nickel salts. Other sources of anions are suitably Lewis acids, such as halides, in particular fluorides, of boron, tin, antimony, aluminium or arsenic. Boron trifluoride and boron pentafluoride are very suitable. Other suitable Lewis acids are hydrocarbylboranes. The hydrocarbylboranes may comprise one hydrocarbyl group or two or three of the same or different hydrocarbyl groups attached to boron, such as alkyl, aryl, aralkyl, and cycloalkyl groups, preferably aryl groups. They may also comprise hydrocarbyloxy or hydroxy groups or halogen atoms attached to boron. Examples of very suitable hydrocarbylboranes are triphenylborane, tris-(perfluorophenyl)borane and tris[3,5-bis(trifluoromethyl)phenyl]borane. Again other suitable compounds which may function as a source of anions are aluminoxanes, in particular methyl aluminoxanes and t-butyl aluminoxanes.

The quantity of the source of anions is preferably selected such that it provides in the range of from 0.5 to 50 equivalents of anions per gram atom of Group VIII metal, in particular in the range of from 0.1 to 25 equivalents of anions per gram atom of Group VIII metal. However, the aluminoxanes may be used in such a quantity that the molar ratio of aluminium to the Group VIII metal is in the range of from 4000:1 to 10:1, preferably from 2000:1 to 100:1, most preferably from 500:1 to 200:1.

The performance of the catalyst composition may be improved by incorporating therein an organic oxidant promoter, such as a quinone. Preferred promoters are selected from the group consisting of benzoquinone, naphthoquinone and anthraquinone. The amount of promoter is advantageously in the range of from 1 to 50, preferably in the range of from 1 to 10 mole per gram atom of metal of Group VIII.

The amount of catalyst used in the process of the invention may vary between wide limits. It is advantageous to employ the least quantity of catalyst composition as possible in relation to the quantity of copolymer to be prepared. Recommended quantities of catalyst composition are in the range of 10⁻⁸ to 10⁻², calculated as gram atoms of metal of Group VIII per mole of olefinically unsaturated compound to be copolymerized with carbon monoxide. Preferred quantities are in the range of 10⁻⁷ to 10⁻³ on the same basis.

The olefinically unsaturated compounds A include compounds consisting exclusively of carbon and hydrogen and compounds which in addition comprise hetero atoms, such as unsaturated esters. The olefinically unsaturated compounds A comprise typically up to 15 carbon atoms, more typically up to 10 carbon atoms, in particular up to 6 carbon atoms. Unsaturated hydrocarbons are preferred. Examples of suitable monomers are aliphatic α-olefins such as propene and butene-1, cyclic olefins such as cyclopentene and dicyclopentadiene, aromatic olefins such as styrene and alpha-methylstyrene, and vinyl esters such as vinyl acetate and vinyl propionate. It is preferred to copolymerize carbon monoxide with ethene and another α-olefin, in particular propene or butene-1.

The molar ratio of the olefinically unsaturated compounds present in the reaction phase is determined by the molar ratio at which they are to be incorporated into the copolymer. In accordance with this invention, the molar ratio of the olefinically unsaturated compounds present in the reaction phase is governed by the quotient r₂/r₁ or by the quotient r₂/r₃, which are both as defined hereinbefore. The quotient r₂/r₁ is less than 24. Typically the quotient r₂/r₁ is at least 5; preferably the quotient r₂/r₁ is in the range of from 10 to 22. The quotient r₂/r₃ is less than 0.9. However, it is preferred that the quotient r₂/r₃ is in the range of from 0.2 to 0.85, more preferably in the range of from 0.4 to 0.8. When more than one olefinically unsaturated compound A is employed different ratios r₁, r₂ and r₃ apply separately to each of them.

Generally, the molar ratio of on the one hand carbon monoxide to on the other hand the olefinically unsaturated compounds may vary between wide ranges. It has been found that the quantity of the olefinically unsaturated compound present in the reaction phase can be reduced, substantially without serious detriment to the polymerization rate and even with an enhancing effect on the polymer's molecular weight, by increasing in the reaction phase the molar ratio of carbon monoxide to the total of ethene and the olefinically unsaturated compound A. Preferably this molar ratio is more than 0.1:1. However, in order to maintain the polymerization rate at an attractive level this ratio does preferably not exceed 0.45:1. Good results can be obtained, in particular also with respect to the molecular weight of the copolymers, when in the reaction phase the molar ratio of carbon monoxide to the total of ethene and the olefinically unsaturated compound A is in the range of from 0.12:1 to 0.3:1.

The copolymerization process of this invention is typically carried out in the presence of a liquid diluent, in which case the liquid phase is the reaction phase of the polymerization mixture. Preferably a diluent is used in which the copolymer to be prepared forms a suspension, in view of which a diluent may be selected in which the copolymer is insoluble or virtually insoluble. Examples of liquid diluents are ketones (e.g. acetone), chlorinated hydrocarbons (e.g. chloroform or dichloromethane), aromatics (e.g. toluene, benzene, chlorobenzene) and protic diluents, such as the lower alcohols (e.g. methanol and ethanol). Mixtures of liquid diluents may be used as well, for example protic diluents may comprise aprotic compounds. In certain embodiments the process of this invention may also be carried out as a gas phase process, in which case the gas phase is the reaction phase of the polymerization mixture.

When the process of this invention is carried out such that the prepared copolymer is formed as a suspension in a liquid diluent it is advantageous to have a solid particulate material suspended in the diluent before the monomers are contacted with the catalyst composition. Typically a copolymer of carbon monoxide and an olefinically unsaturated compound is used as the solid particulate material, in particular a copolymer which is based on the same monomers as the copolymer to be prepared. The latter means that, for example, when a linear alternating copolymer of carbon monoxide, ethene and propene will be prepared a linear alternating copolymer of carbon monoxide, ethene and propene from an earlier polymer preparation will be suspended in the diluent. Other suitable solid particulate materials may be inorganic or organic materials, such as silica, alumina, talc, soot and polymers, for example polyethene, polypropene and polystyrene. The solid particulate material is suitably used in a quantity of 0.1-20 %w, relative to the weight of the diluent, more suitably in a quantity of 0.5-10 %w. The bulk density of the solid particulate material is typically in the range of 50-1000 kg/m³, in particular in the range of 100-500 kg/m³. The solid particulate material has typically an average particle size of 10⁻⁶-10⁻³ m, in particular 10⁻⁶-5x10⁻⁴ m. The average particle size is determined as follows. With the aid of a commercially available particle size analyser, a cumulative weight distribution of a representative sample of the solid particulate material is determined as a function of the particle size. The cumulative weight distribution function is converted into a cumulative surface area distribution function, as described by Terence Allen in Particle Size Measurement (Chapman and Hall, London, 1981), p. 122 ff. The average particle size is found as the median of the cumulative surface area distribution function.

The copolymerization process is usually carried out at a temperature in the range of 20 to 200 °C, preferably at a temperature in the range of 30 to 150 °C. The reaction is conveniently performed at a pressure in the range of 2 to 200 bar, pressures in the range of 20 to 100 bar being preferred. The process may be carried out as a batch process or as a continuous process. In the latter case it is advantageous to apply two or more reactors connected in series, because this increases the quantity of polymer which can be prepared within a given period of time using a certain reaction volume and a certain quantity of catalyst.

It is a particular feature of the process of this invention that the excess of the olefinically unsaturated compound A present in the reaction phase, and in the entire polymerization mixture, is particularly low. This favours a smooth recycle of the olefinically unsaturated compound A. The recycle can be accomplished by using methods which are known per se and which can be selected according to the physical properties of the olefinically unsaturated compound A and those of other components present in the copolymerization mixture. The recycle may comprise the steps of recovering the olefinically unsaturated compound A by partly or completely separating it from other reaction components present and supplying it to a subsequent copolymerization process with addition, if necessary, of fresh olefinically unsaturated compound A. Optionally a bleed may be applied in order to avoid a build-up of impurities.

The copolymers can be recovered from the copolymerization process using known methods. They can suitably be used as thermoplastics for fibres, films or sheets, or for injection moulding, compression moulding and blowing applications. They may be used for applications in the car industry, for the manufacture of packaging materials for food and drinks and for various uses in the domestic sphere.

The invention will be illustrated by the following examples. The molar ratio of propene to ethene as incorporated in a copolymer was determined indirectly from the copolymer's melting point using a predetermined relation between the melting point and the said ratio, determined by ¹³C-NMR spectroscopy. The melting points were any case determined by differential scanning calorimetry. The limiting viscosity numbers (LVN) of a copolymer was used as a measure for its molecular weight: a higher LVN indicating a higher molecular weight. The LVN of a copolymer was determined from the inherent viscosity at 60 °C of four solutions of the copolymer in m-cresol with different copolymer concentrations.

### EXAMPLE 1

A copolymer of carbon monoxide with ethene and propene was prepared as follows.

A 2-litre autoclave equipped with baffles and a mechanical stirrer was charged with 880 ml methanol and 15 g of a powder of a copolymer of carbon monoxide with ethene and propene obtained in a previous copolymerization. The autoclave was closed and purged with nitrogen to remove the air present. The contents of the autoclave were heated to 76 °C. Carbon monoxide, ethene and propene were fed into the autoclave such that their partial pressures were 13 bar, 23 bar and 9 bar, respectively. In the liquid phase the molar ratio of propene to ethene was 1:1 and the molar ratio of carbon monoxide to the total of ethene and propene was 0.054:1. A catalyst solution comprising
20 ml acetone,
0.045 mmoles palladium acetate,
0.047 mmoles 2,2-dimethyl-1,3-bis[bis(2-methoxyphenyl)-phosphino]-2-silapropane, and
0.9 mmoles trifluoroacetic acid
was injected into the autoclave. The pressure of the autoclave was maintained by supplying a mixture of carbon monoxide and ethene (1:1 molar ratio). After 6 hours the pressure was released and the autoclave was allowed to cool to room temperature. The polymer product was recovered by filtration, washed with methanol and dried.

The average polymerization rate was calculated from the yield of copolymer. The results are shown in Table 1.

### EXAMPLES 2 - 5

A copolymer of carbon monoxide with ethene and propene was prepared as indicated in Example 1, except that the partial pressures of carbon monoxide, ethene and propene were altered as shown in Table 1.

The molar ratios of the monomers in the liquid phase and the results are indicated in Table 1.

**TABLE 1**

| Example | 1 | 2 | 3 | 4 | 5 |
|---|---|---|---|---|---|
| Partial pressures (bar) | | | | | |
| carbon monoxide (CO) | 13 | 23 | 30 | 33 | 13 |
| ethene (C2) | 23 | 16 | 12 | 9 | 19 |
| propene (C3) | 9 | 7 | 5 | 4 | 14 |

| Molar ratio in the liquid phase | | | | | |
|---|---|---|---|---|---|
| C3/C2 (r₂) | 1.0 | 1.1 | 1.1 | 1.1 | 1.8 |
| CO/(C2 + C3) | 0.054 | 0.14 | 0.26 | 0.38 | 0.057 |
| Polymerization rate (kg/(g Pd.hour)) | 10 | 8.4 | 9.0 | 6.2 | 9.6 |

| Copolymer product | | | | | |
|---|---|---|---|---|---|
| molar ratio C3/C2 (r₁) | 0.058 | 0.053 | 0.058 | 0.064 | 0.14 |
| LVN (dl/g) | 1.6 | 1.9 | 1.9 | 1.5 | 1.0 |
| Quotient r₂/r₁ | 17 | 21 | 19 | 17 | 13 |

### EXAMPLE 6

A copolymer of carbon monoxide with ethene and propene was prepared as indicated in Example 5, except that 0.27 mmoles trifluoroacetic acid was used instead of 0.9 mmoles.

The polymerization rate was 7.7 kg/g palladium.hour). The molar ratio of propene to ethene in the copolymer obtained (r₁) was 0.14:1. Thus, the quotient r₂/r₁ amounted to 13. The LVN of the copolymer was 0.85 dl/g.

### EXAMPLE 7

A copolymer of carbon monoxide with ethene and propene was prepared as indicated in Example 2, except that the polymerization temperature was 82 °C instead of 76 °C. In the liquid phase the molar ratio of propene to ethene was 1.1:1 and the molar ratio of carbon monoxide to the total of ethene and propene was 0.15:1.

The polymerization rate was 15 kg/g palladium.hour). The molar ratio of propene to ethene in the copolymer obtained (r₁) was 0.058:1. Thus, the quotient r₂/r₁ amounted to 19. The LVN of the copolymer was 1.2 dl/g.

### EXAMPLE 8 (for comparison)

A copolymer of carbon monoxide with ethene and propene was prepared as indicated in Example 1, except that 0.047 mmoles 1,3-bis[bis(2-methoxyphenyl)phosphino]-propane was used instead of 2,2-dimethyl-1,3-bis[bis(2-methoxyphenyl)phosphino]-2-silapropane.

The molar ratio of propene to ethene in the copolymer obtained (r₁) was 0.031:1. Thus, the quotient r₂/r₁ amounted to 32.

### EXAMPLE 9 (for comparison)

A copolymer of carbon monoxide with ethene and propene was prepared as indicated in Example 1, except that 0.047 mmoles 1,3-bis[bis(2-methoxyphenyl)phosphino]-propane was used instead of 2,2-dimethyl-1,3-bis[bis(2-methoxyphenyl)phosphino]-2-silapropane, and that the partial pressures of carbon monoxide, ethene and propene were 23 bar, 34 bar and 23 bar, respectively. In the liquid phase the molar ratio of propene to ethene was 1.5:1 and the molar ratio of carbon monoxide to the total of ethene and propene was 0.055:1.

The molar ratio of propene to ethene in the copolymer obtained (r₁) was 0.058:1. Thus, the quotient r₂/r₁ amounted to 26.

When the results of examples 1-4 and 7 (according to the invention) are compared with those of comparative example 8 it can be seen that the use of 2,2-dimethyl-1,3-bis[bis(2-methoxyphenyl)phosphino]-2-silapropane as the bidentate ligand led to about 6 %-mole incorporation of propene in the copolymer, relative to ethene, at a propene/ethene molar ratio in the liquid phase of about 1:1, while the incorporation was about 3 %-mole when 1,3-bis[bis(2-methoxyphenyl)phosphino]propane was used at the same propene/ethene ratio in the liquid phase. A similar trend can be seen upon comparing examples 5 and 6 (according to the invention) with comparative example 9. The differences in the efficiencies of propene incorporation can also be seen by comparing the quotients r₂/r₁.

In examples 2 and 9 copolymers were prepared which have virtually the same quantities of propene incorporated. The reaction conditions differed in the molar ratios of propene to ethene and in that, as the ligand, 2,2-dimethyl-1,3-bis[bis(2-methoxyphenyl)-phosphino]-2-silapropane was used in example 2 and 1,3-bis[bis(2-methoxyphenyl)phosphino]propane in example 9. Although the total molar quantities of propene and ethene were not equal in these examples, the quotient r₂/r₃ can be calculated to amount to 0.73. (It is noted that in examples 1-4, at a fixed value of r₂, variations in the total molar quantities of propene and ethene have not influenced the propene incorporation.)

A comparison of examples 2-4 with example 1 shows that the molar ratio of carbon monoxide to the total of ethene and propene can be increased without a substantial decrease of the polymerization rate. Especially attractive results, also with respect to the LVN of the copolymer, were accomplished in examples 2 and 3.

By comparing the partial pressures of propene in example 3 and example 9 it can be seen that for the preparation of copolymers with approximately the same content of monomer units originating in propene 4-5 times less propene may be present in the polymerization mixture when 2,2-dimethyl-1,3-bis[bis(2-methoxyphenyl)phosphino]-2-silapropane is used as the bidentate ligand instead of 1,3-bis[bis(2-methoxyphenyl)phosphino]propane.

## Claims

1. A process for the preparation of a linear alternating copolymer of carbon monoxide with ethene and another olefinically unsaturated compound (A) wherein a copolymer of which the molar ratio (r₁) of the monomer units originating in the olefinically unsaturated compound A to the monomer units originating in ethene is in the range of from 1:100 to 1:3, is prepared by contacting the monomers in the presence of a liquid diluent with a catalyst composition which is based on
(a) a source of a Group VIII metal, and
(b) a bidentate ligand of the general formula R¹R²M¹-R-M²R³R⁴ (I) wherein M¹ and M² independently represent a phosphorus, arsenic or antimony atom, R¹, R², R³ and R⁴ independently represent unsubstituted or substituted aryl groups and R represents a bivalent bridging group which consists of three atoms in the bridge of which the middle atom is a tetravalent atom which carries two monovalent substituents R⁵ and R⁶ consisting of carbon, hydrogen and optionally oxygen, and the two outer bridging atoms are carbon atoms, while the quotient r₂/r₁ is less than 24, in which quotient r₁ is as defined hereinbefore and r₂ is the molar ratio of the olefinically unsaturated compound A to ethene in the liquid phase.

2. A process as claimed in claim 1, characterized in that the quotient r₂/r₁ is at least 5.

3. A process as claimed in claim 1 or 2, characterized in that the quotient r₂/r₁ is in the range of from 10 to 22.

4. A process for the preparation of a linear alternating copolymer of carbon monoxide with ethene and another olefinically unsaturated compound (A) wherein a copolymer of which the molar ratio (r₁) of the monomer units originating in the olefinically unsaturated compound A to the monomer units originating in ethene is in the range of from 1:100 to 1:3, is prepared by contacting the monomers with a catalyst composition which is based on
(a) a source of a Group VIII metal, and
(b) a bidentate ligand of the general formula R¹R²M¹-R-M²R³R⁴ (I) wherein M¹ and M² independently represent a phosphorus, arsenic or antimony atom, R¹, R², R³ and R⁴ independently represent unsubstituted or substituted aryl groups and R represents a bivalent bridging group which consists of three atoms in the bridge of which the middle atom is a tetravalent atom which carries two monovalent substituents R⁵ and R⁶ consisting of carbon, hydrogen and optionally oxygen, and the two outer bridging atoms are carbon atoms, while the quotient r₂/r₃ is less than 0.9, in which quotient r₂ is the molar ratio of the olefinically unsaturated compound A to ethene in the reaction phase, and r₃ is the molar ratio of the olefinically unsaturated compound A to ethene in the reaction phase of an identical process which is carried out to obtain a copolymer having the same ratio r₁ as the copolymer to be prepared except that in the latter process the bidentate ligand of the general formula (I) is replaced by an equimolar quantity of a bidentate ligand of the general formula R¹R²M¹-CH₂-CH₂-CH₂-M²R³R⁴ wherein the groups M¹, M², R¹, R², R³ and R⁴ are chosen as for the bidentate ligand of the formula (I) and that r₃ differs from r₂ whilst the same total molar quantity of the olefinically unsaturated compound A and ethene is applied.

5. A process as claimed in claim 4, characterized in that the quotient r₂/r₃ is in the range of from 0.2 to 0.85.

6. A process as claimed in claim 4 or 5, characterized in that the quotient r₂/r₃ is in the range of from 0.4 to 0.8.

7. A process as claimed in any one of claims 1-6, characterized in that a copolymer is prepared of which the molar ratio r₁ is in the range of from 1:25 to 1:10 or in the range of from 1:10 to 1:5.

8. A process as claimed in any one of claims 1-7, characterized in that the Group VIII metal is palladium and in that in the bidentate ligand of formula (I) M¹ and M² represent phosphorus atoms, R¹, R², R³ and R⁴ represent phenyl groups which are substituted, in particular at an ortho position with respect to M¹ or M², with an alkoxy group, especially a methoxy group, the middle bridging atom of the bridging group R is a carbon atom or a silicon atom the two outer bridging atoms of the bridging group R are the carbon atoms of methylene groups (-CH₂-), and the substituents R⁵ and R⁶ are alkyl groups, in particular methyl groups or n-alkyl groups of at least two carbon atoms.

9. A process as claimed in any one of claims 1 - 8, characterized in that the bidentate ligand of formula (I) is selected from the group consisting of 2,2-dimethyl-1,3-bis(2-methoxyphenyl,phenylphosphino)-propane, 2,2-dimethyl-1,3-bis[bis(2-methoxyphenyl)-phosphino]propane, 2,2-dimethyl-1,3-bis[bis(2-methoxyphenyl)phosphino]-2-silapropane, 2,2-diethyl-1,3-bis-[bis(2-methoxyphenyl)phosphino]propane, 2-ethyl-2-n-butyl-1,3-bis[bis(2-methoxyphenyl)phosphino]propane and 2,2-diethyl-1,3-bis[bis(2-methoxyphenyl)phosphino]-2-silapropane.

10. A process as claimed in any one of claims 1-9, characterized in that the bidentate ligand of formula (I) is applied in a quantity in the range of 0.5 to 2 moles per gram atom of metal of Group VIII.

11. A process as claimed in any of claims 1-10, characterized in that the catalyst composition is based, as an additional component, on a source of anions selected from sources of anions of protic acids, tetrahydrocarbylborate anions and carborate anions, or selected from Lewis acids and aluminoxanes, which anions are preferably applied in a quantity of from 1 to 25 equivalents per gram atom of Group VIII metal, on the understanding that aluminoxanes are preferably applied in such a quantity that the molar ratio of aluminium to the Group VIII metal is in the range of from 2000:1 to 100:1, in particular from 500:1 to 200:1.

12. A process as claimed in claim 11, characterized in that the source of anions is an acid having a pKa of less than 4, in particular less than 2, when measured in aqueous solution at 18 °C.

13. A process as claimed in any one of claims 1-12, characterized in that in the reaction phase or in the liquid phase, as the case may be, the molar ratio of carbon monoxide to the total of ethene and the olefinically unsaturated compound A is in the range of from 0.1:1 to 0.45:1, in particular in the range of from 0.12:1 to 0.3:1.

14. A process as claimed in any one of claims 1-13, characterized in that the olefinically unsaturated compounds A is an α-olefin, in particular propene or butene-1, and in that the process is carried out in the presence of a liquid diluent as the reaction phase in which liquid diluent the prepared copolymer is formed as a suspension, it is carried out at a temperature in the range of 30 to 150 °C and at a pressure in the range of 20 to 100 bar using a quantity of catalyst composition in the range of 10⁻⁷ to 10⁻³, calculated as gram atoms of metal of Group VIII per mole of olefinically unsaturated compound to be copolymerized with carbon monoxide.

15. A process for the preparation of a linear alternating copolymer of carbon monoxide with an olefinically unsaturated compound (A), not being ethene, and optionally ethene comprising contacting carbon monoxide with the olefinically unsaturated compound A and optionally ethene in the presence of a suitable catalyst, on the understanding that at least a part of the olefinically unsaturated compound A has been recovered from a preceding process for the preparation of a linear alternating copolymer of carbon monoxide with ethene and the olefinically unsaturated compound A which preceding process comprises contacting the monomers with a catalyst composition which is based on
(a) a source of a Group VIII metal, and
(b) a bidentate ligand of the general formula R¹R²M¹-R-M²R³R⁴ (I) wherein M¹ and M² independently represent a phosphorus, arsenic or antimony atom, R¹, R², R³ and R⁴ independently represent unsubstituted or substituted aryl groups and R represents a bivalent bridging group which consists of three atoms in the bridge of which the middle atom is a tetravalent atom which carries two monovalent substituents R⁵ and R⁶ consisting of carbon, hydrogen and optionally oxygen, and the two outer bridging atoms are carbon atoms.

16. A process as claimed in claim 15, characterized in that it is carried out using ethene as one of the monomers and using as the catalyst a catalyst composition as defined for the preceding process.

17. A catalyst composition which is based on
(a) a source of a Group VIII metal, and
(b) a bidentate ligand of the general formula R¹R²M¹-R-M²R³R⁴ wherein M¹ and M² independently represent a phosphorus, arsenic or antimony atom, R¹, R², R³ and R⁴ independently represent unsubstituted or substituted hydrocarbyl groups and R represents a bivalent bridging group which consists of three atoms in the bridge of which the middle atom is a tetravalent atom which carries two monovalent substituents R⁵ and R⁶ at least one of which represents a n-alkyl group of at least two carbon atoms and the other of R⁵ and R⁶, if any, is a group consisting of carbon, hydrogen and optionally oxygen, and the two outer bridging atoms are carbon atoms.

18. A bidentate ligand as defined in claim 17.

19. A process for the preparation of linear alternating copolymers of carbon monoxide with ethene and optionally with another olefinically unsaturated compound (A) comprising contacting the monomers with a catalyst composition as claimed in claim 17.
